# EUROPEAN PATENT APPLICATION

(11) **EP 4 708 540 A1**
(43) Date of publication of application: **11.03.2026**
(21) Application number: 24815659.8
(22) Date of filing: 05.03.2024
(51) Int. Cl.: H01M 50/457, H01M 50/446, H01M 50/42, H01M 50/411, H01M 50/403, H01M 50/489

(54) **SEPARATOR FOR ELECTROCHEMICAL DEVICE HAVING POLYMER BINDER LAYER, ELECTROCHEMICAL DEVICE COMPRISING SAME, AND METHOD FOR MANUFACTURING SAME**

(30) Priority: 26.05.2023 KR 20230068198
(71) Applicant: LG Energy Solution, Ltd., Seoul 07335 (KR)
(72) Inventor: LEE, Ji Su, Daejeon 34122 (KR); KA, Kyung Ryun, Daejeon 34122 (KR); KIM, Hye Won, Daejeon 34122 (KR); SUNG, Dong Wook, Daejeon 34122 (KR)
(74) Representative: Hoffmann Eitle
(86) International application number: PCT/KR2024/002772
(87) International publication number: WO 2024/248277

(57) **Abstract**

A separator for an electrochemical device includes a porous polymer substrate; a coating layer provided on at least one surface of the porous polymer substrate and including a first polymer binder and inorganic particles; and an adhesive layer provided on the coating layer and including a second polymer binder, in which the first polymer binder is a solution type binder, and a content of the first polymer binder included in a portion of the coating layer adjacent to the porous polymer substrate is greater than a content of the first polymer binder included in another portion facing away from the porous polymer substrate.

## Description

### [Technical Field]

The present application claims priority to and the benefits of Korean Patent Application No. 10-2023-0068198, filed with the Korean Intellectual Property Office on May 26, 2023, the entire contents of which are incorporated herein by reference. The present disclosure relates to a separator for an electrochemical device, an electrochemical device including the same, a manufacturing method thereof, and an electrode, a separator, and a secondary battery prepared using the same.

### [Background Art]

Among the components of an electrochemical device, a separator includes a polymer substrate having a porous structure located between a positive electrode and a negative electrode, and serves to isolate the positive electrode and the negative electrode, prevent electrical short circuit between the two electrodes, and allow electrolyte and ions to pass through.

Meanwhile, improvements are being made to characteristics of each of the positive electrode, the negative electrode, the electrolyte, and the separator to enhance the performance and safety of secondary batteries using the electrochemical device.

### [Disclosure]

### [Technical Problem]

The present disclosure provides a separator for an electrochemical device, an electrochemical device including the same, and a manufacturing method thereof, in which a polymer binder included in an adhesive layer forming slurry is disposed at an interface of a coating layer and a porous polymer substrate to improve adhesion between the coating layer and the porous polymer substrate, and to improve dispersibility of inorganic particles included in a coating layer forming slurry.

However, the problems to be solved by the present disclosure are not limited to those mentioned above, and other problems not mentioned will be clearly understood by those skilled in the art from the following description.

### [Technical Solution]

According to an embodiment of the present disclosure, a separator for an electrochemical device includes a porous polymer substrate; a coating layer provided on at least one surface of the porous polymer substrate and including a first polymer binder and inorganic particles; and an adhesive layer provided on the coating layer and including a second polymer binder, in which the first polymer binder is a solution type binder, and the content of the first polymer binder included in a portion of the coating layer adjacent to the porous polymer substrate is greater than the content of the first polymer binder included in another portion facing away from the porous polymer substrate.

According to an embodiment of the present disclosure, a solubility of the second polymer binder in water is lower than a solubility of the first polymer binder in water.

According to an embodiment of the present disclosure, the first polymer binder is selected from the group consisting of polyacrylic acid, polyurethane, polyacrylonitrile, polyethylene glycol, polyacrylamide, polyvinyl alcohol, and combinations thereof.

According to an embodiment of the present disclosure, the second polymer binder is a particle type binder.

According to an embodiment of the present disclosure, a method of manufacturing a separator for an electrochemical device includes: providing a coating layer by applying a coating layer forming slurry including a first polymer binder and inorganic particles onto at least one surface of a porous polymer substrate; and providing an adhesive layer by applying an adhesive layer forming slurry including a first polymer binder and a second polymer binder onto the coating layer, in which the first polymer binder is a solution type binder, in which a solubility of the second polymer binder in water is lower than a solubility of the first polymer binder in water.

According to an embodiment of the present disclosure, the method further includes drying the coating layer after the providing the coating layer; and drying the adhesive layer after the providing the adhesive layer.

According to an embodiment of the present disclosure, the content of the first polymer binder dissolved in a solvent in the coating layer forming slurry is about 0.1% by weight or more and 10% by weight or less.

According to an embodiment of the present disclosure, the content of the second polymer binder dissolved in a solvent in the adhesive layer forming slurry is about 5% by weight or more and 40% by weight or less.

According to an embodiment of the present disclosure, an average particle diameter (D₉₀) of the inorganic particles included in the coating layer forming slurry is about 0.01 µm or more and 10.0 µm or less.

According to an embodiment of the present disclosure, an electrochemical device includes: a positive electrode; a negative electrode; and the separator for the electrochemical device that is interposed between the positive electrode and the negative electrode, in which an adhesion between the porous polymer substrate and the coating layer is about 30 gf/25 mm or more.

According to an embodiment of the present disclosure, the adhesion between the porous polymer substrate and the coating layer is about 5 gf/25 mm or more greater than an adhesion between the adhesive layer and either the positive electrode or the negative electrode.

According to an embodiment of the present disclosure, an electrochemical device includes: a positive electrode; a negative electrode; and a separator interposed between the positive electrode and the negative electrode, in which the separator includes: a porous polymer substrate; a coating layer provided on at least one surface of the porous polymer substrate and including a first polymer binder and inorganic particles; and an adhesive layer provided on the coating layer and including a second polymer binder, the second polymer binder is a solution type binder, and an adhesion between the porous polymer substrate and the coating layer is greater than an adhesion between the adhesive layer and either the positive electrode or the negative electrode.

### [Advantageous Effects]

The separator for an electrochemical device according to an embodiment of the present disclosure improves the adhesion between the coating layer and the porous polymer substrate.

The method of manufacturing an electrochemical device according to an embodiment of the present disclosure improves the dispersibility of inorganic particles and polymer binder by maintaining the viscosity of the coating layer forming slurry at a low level.

The electrochemical device according to an embodiment of the present disclosure improves the adhesion between the coating layer and the porous polymer substrate and improves the adhesion between the separator and the electrodes.

### [Description of the Drawings]

FIG. 1 is a schematic diagram of a separator for an electrochemical device according to an embodiment of the present disclosure.
FIG. 2 is a flowchart of a method of manufacturing a separator for an electrochemical device according to an embodiment of the present disclosure.
FIG. 3 is a schematic diagram of an electrochemical device according to an embodiment of the present disclosure.

Corresponding reference characters indicate corresponding components throughout the several views of the drawings. The drawing figures presented are illustrated for simplicity and clarity and have not necessarily been drawn to scale. For example, the dimensions of some of the elements in the figures may be exaggerated relative to other elements to help to improve understanding of various embodiments. Also, common but well-understood elements that are useful or necessary in a commercially feasible embodiment are often not depicted in order to facilitate a less obstructed view of these various embodiments.

### [Best Mode]

In the specification, when a part "includes" a certain component, this means that the part may further include other components rather than excluding other components, unless specifically stated to the contrary.

The terms used herein are for the purpose of describing embodiments and are not intended to limit the present disclosure, and in the specification, singular forms also include the plural forms unless specifically stated in the context.

In the specification, "A and/or B" means "A and B, or A or B."

In the specification, when a component is said to be provided "on" another component, this does not exclude other components from being disposed therebetween, but rather means that other components may be further disposed therebetween, unless specifically stated to the contrary.

In the specification, "%" means % by weight unless otherwise explicitly indicated.

As used herein, the words "about," "approximately," and "substantially" are used to mean a range or approximation of a numerical value or degree, taking into account inherent manufacturing and material tolerances, and are used to prevent infringers from taking unfair advantage of the disclosure where precise or absolute numbers are provided to aid in the understanding of the disclosure.

In the specification, the characteristic of having pores means that an object includes a plurality of pores and that gaseous and/or liquid fluid is able to pass from one side to the other side of the object due to a structure in which the pores are connected to each other.

In the specification, the separator has porous characteristics including a large number of pores, and serves as a porous ion-conducting barrier that allows ions to pass while blocking electrical contact between the positive electrode and negative electrode in an electrochemical device.

The separator itself does not participate in the electrochemical reaction, but physical properties such as wettability to the electrolyte, degree of porosity, and thermal contraction rate affect the performance and safety of the electrochemical device.

Accordingly, as an example of various methods for adding a coating layer to a porous polymer substrate to enhance the physical properties of a separator, and for adding various substances to the coating layer to alter the properties of the coating layer, inorganic substances are added to the coating layer to enhance the mechanical strength of the separator, or inorganic substances or hydrates are added to the coating layer to enhance the flame retardancy and heat resistance of the polymer substrate.

The separator may be bonded to the electrode through a lamination process, and in order to ensure adhesion between the electrode and the separator, a polymer binder is added to the coating layer composition of the separator.

Meanwhile, when the electrode and the separator are bonded during the battery manufacturing process, the manufacturing of the battery is facilitated, the thickness of the battery is implemented uniformly, and the stiffness of the battery is improved, so a multilayer separator technology is being developed in which a first coating layer and a second coating layer are formed on the separator. The adhesion between the electrode and the separator is affected by the adhesion between the adhesive binder and the electrode, the adhesion between the adhesive binder and the inorganic coating layer, and the adhesion between the inorganic coating layer and the porous substrate. In the process of manufacturing a multilayer separator, when the solvent used for the first coating layer and the second coating layer is the same, the adhesion between the first coating layer and the porous polymer substrate is weakened during the process of manufacturing the second coating layer. In order to solve such a problem, a solution-type binder may be added to the slurry for preparing the first coating layer to improve the adhesion between the porous polymer substrate and the first coating layer, but the slurry for preparing the first coating layer has a problem that the viscosity of the slurry is increased by the solution-type binder, resulting in poor dispersibility.

The present disclosure provides a separator that is capable of improving the adhesion between a porous polymer substrate and a coating layer while preventing the degradation of the dispersibility of inorganic substances contained in the coating layer.

Hereinafter, the present disclosure will be described in more detail.

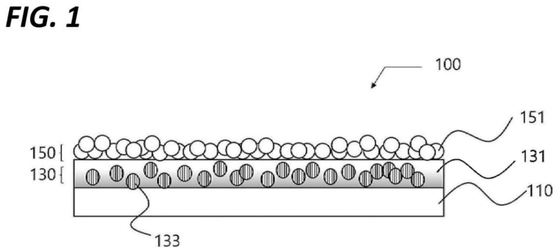

FIG. 1 is a schematic diagram of a separator 100 for an electrochemical device according to an embodiment of the present disclosure. Referring to FIG. 1, the separator 100 for an electrochemical device according to an embodiment of the present disclosure will be described.

According to an embodiment of the present disclosure, the separator 100 for an electrochemical device includes a porous polymer substrate 110; a coating layer 130 provided on at least one surface of the porous polymer substrate 110 and including a first polymer binder 131 and inorganic particles 133; and an adhesive layer 150 provided on the coating layer 130 and including a second polymer binder 151, in which the first polymer binder 131 is a solution type binder, and the content of the first polymer binder 131 included in a portion of the coating layer 130 adjacent to the porous polymer substrate 110 is greater than the content of the first polymer binder 131 included in another portion facing away from the porous polymer substrate 110.

The separator 100 for an electrochemical device according to an embodiment of the present disclosure improves the adhesion between the coating layer 130 and the porous polymer substrate 110.

According to an embodiment of the present disclosure, the separator 100 for an electrochemical device includes the porous polymer substrate 110. As described above, the separator 100 for an electrochemical device includes the porous polymer substrate 110, which allows lithium ions to pass through while blocking electrical contact, and implements a shutdown function at an appropriate temperature.

According to an embodiment of the present invention, the porous polymer substrate 110 is prepared using a polyolefin resin as a base resin. The polyolefin resin is, for example, polyethylene, polypropylene, or polypentene, and include one or more of these. A separator having a porosity, i.e., a plurality of pores, made from the polyolefin resin as a base resin, provides a shutdown function at an appropriate temperature.

According to an embodiment of the present disclosure, the weight average molecular weight of the polyolefin resin is about 500,000 or more and 1,500,000 or less. When the weight average molecular weight of the polyolefin resin is adjusted in the above-described range, the compression resistance of the separator is improved. Furthermore, when using a mixture of different polyolefin resins or forming a separator with a multilayer structure of different polyolefin resins, the weight average molecular weight of the polyolefin resins is calculated by adding the weight average molecular weight of each polyolefin resin according to the content ratio of each polyolefin resin.

In this specification, the "weight average molecular weight (Mw)" is measured by gel permeation chromatography (GPC, PL GPC220, Agilent Technologies), and the measurement conditions are as follows.
- Column: PL Olexis (Polymer Laboratories)
- Solvent: TCB (Trichlorobenzene)
- Flow rate: 1.0 ml/min
- Sample concentration: 1.0 mg/ml
- Injection volume: 200 µl
- Column temperature: 160 °C
- Detector: Agilent High Temperature RI detector
- Standard: Polystyrene (calibrated with a cubic function)

According to an embodiment of the present disclosure, the porous polymer substrate 110 is prepared by a method (wet method) of kneading a polyolefin-based resin with a plasticizer (diluent) at a high temperature to form a single phase, phase-separating the polymer material and the plasticizer during cooling, extracting the plasticizer to form pores, and then stretching and heat setting. Further, the porous polymer substrate using a polyolefin-based resin has a core portion made of a mixture of polyethylene and polypropylene and a polyethylene skin portion laminated to both sides of the core portion.

According to an embodiment of the present disclosure, the average size of the pores and the maximum size of the pores of the separator 100 for an electrochemical device may be easily prepared by a person skilled in the art by adjusting the mixing ratio of the plasticizer, the stretching magnification, and the heat setting treatment temperature to fall within the scope of the present disclosure.

According to an embodiment of the present disclosure, the separator 100 for an electrochemical device includes the coating layer 130 provided on at least one surface of the porous polymer substrate 110. As described above, since the separator 100 for an electrochemical device includes the coating layer 130 provided on at least one surface of the porous polymer substrate 110, it is possible to improve the heat resistance of the separator, enhance the mechanical properties, and prevent the separator from shrinking at high temperatures, thereby causing an electrical short circuit to the electrodes.

According to an embodiment of the present disclosure, the coating layer 130 includes a first polymer binder 131 and inorganic particles 133. As described above, since the coating layer 130 includes the first polymer binder 131 and the inorganic particles 133, it is possible to improve the heat resistance of the separator, improve the mechanical properties, prevent the separator from shrinking at high temperatures and causing an electrical short circuit to the electrode, form pores inside the coating layer, and improve the adhesion between the porous polymer substrate and the coating layer.

In an embodiment of the present disclosure, the adhesion between the porous polymer substrate and the coating layer refers to the bonding between the porous polymer substrate and the coating layer. For example, the adhesion between the porous polymer substrate and the coating layer is measured using a universal testing machine (UTM) to measure the peel strength when the separator and adhesive tape are attached and then removed. Alternatively, the separator is cut into a 70 mm (length) x 25 mm (width) piece to prepare a specimen which is then attached and fixed to a glass plate using a double-sided tape, and the separator portion of the specimen is peeled off at an angle of 180° at a speed of 150 mm/min at 25 °C, and the strength is measured.

According to an embodiment of the present disclosure, the coating layer 130 includes a plurality of pores. For example, the coating layer 130 is a porous coating layer. Alternatively, the coating layer 130 is a porous coating layer including a plurality of pores therein. As described above, the coating layer 130 includes a plurality of pores, which blocks the physical contact between the negative electrode and positive electrode, but allows the lithium ions to pass through, and in turn, allows current to flow.

According to an embodiment of the present disclosure, the coating layer 130 is formed by the bonding and aggregation of the inorganic particles 133 by the first polymer binder 131. The pores inside the coating layer 130 originate from the interstitial volume, which is an empty space between the inorganic particles.

According to an embodiment of the present disclosure, the first polymer binder 131 is a solution type binder. For example, the first polymer binder 131 is dissolved in a solvent and provided in the pores of the coating layer. For example, the first polymer binder 131 is dissolved in a solvent contained in a coating layer forming slurry and/or an adhesive layer forming slurry, which will be described later, and is provided in the pores of the coating layer. As described above, since the first polymer binder 131 is selected as a solution type binder, the adhesion between the porous polymer substrate and the coating layer is improved.

In an embodiment of the present disclosure, the "solution type" means that 50% by weight or more of a substance to be dissolved is dissolved in 100 g of a solvent at room temperature (20 °C) and 1 atm, relative to 100% by weight of the substance.

According to an embodiment of the present disclosure, the coating layer 130 is formed with a thickness of about 1 µm to 20 µm on either surface of the porous polymer substrate 110, but is not particularly limited thereto. The thickness may be adjusted within an appropriate range by those skilled in the art in terms of heat resistance or electrical resistance.

In an embodiment of the present disclosure, the thickness of the porous polymer substrate, the coating layer and/or the adhesive layer is measured by applying a contact thickness gauge. The contact thickness gauge is, for example, a VL-50S-B from Mitutoyo.

According to an embodiment of the present disclosure, the adhesive layer 150 is provided on the coating layer 130. As described above, since the adhesive layer 150 is provided on the coating layer 130, it is possible to improve the adhesion between the electrode and the separator and improve the heat resistance of the separator.

According to an embodiment of the present disclosure, the adhesive layer 150 includes a second polymer binder 151. As described above, since the second polymer binder 151 is included in the adhesive layer 150, it is possible to improve the uniformity of the inorganic particles in the coating layer, thereby increasing the thickness uniformity of the separator, and improve the adhesive strength of the separator to the electrode.

According to an embodiment of the present disclosure, the content of the first polymer binder 131 included in a portion of the coating layer 130 adjacent to the porous polymer substrate 110 is greater than the content of the first polymer binder 131 included in a portion facing away from the porous polymer substrate 110. As described above, by implementing that the content of the first polymer binder 131 included in a portion adjacent to the porous polymer substrate 110 in the coating layer 130 is greater than the content of the first polymer binder 131 included in a portion facing away from the porous polymer substrate 110, the first polymer binder 131 is disposed in excess in the portion of the coating layer 130 adjacent to the porous polymer substrate 110, thereby improving the adhesion between the coating layer 130 and the porous polymer substrate 110. Furthermore, by implementing a relatively low content of the first polymer binder 131 in the coating layer forming slurry, which will be described later, an increase in viscosity of the coating layer forming slurry may be suppressed, so that a low particle size may be implemented, thereby improving the dispersibility of the inorganic particles 133 in the coating layer forming slurry.

According to an embodiment of the present disclosure, a solubility of the second polymer binder 151 in water is lower than a solubility of the first polymer binder 131 in water. As described above, by implementing the solubility of the second polymer binder 151 in water to be smaller than the solubility of the first polymer binder 131 in water, the second polymer binder 151 is not dissolved by the solvent of the adhesive layer forming slurry, so that the second polymer binder 151 is present in the adhesive layer 150, which improves the adhesion of the adhesive layer 150 to the electrode.

According to an embodiment of the present disclosure, the first polymer binder 131 is one selected from the group consisting of polyacrylic acid, polyurethane, polyacrylonitrile, polyethylene glycol, polyacrylamide, polyvinyl alcohol, and combinations thereof. As described above, since the first polymer binder 131 is selected as one selected from the group consisting of polyacrylic acid, polyurethane, polyacrylonitrile, polyethylene glycol, polyacrylamide, polyvinyl alcohol, and combinations thereof, the bonding of the inorganic particles 133 within the coating layer 130 is improved, and the adhesion between the coating layer and the porous polymer substrate 110 is improved.

According to an embodiment of the present disclosure, the second polymer binder 151 is a solution type binder. For example, the second polymer binder 151 is dissolved in a solvent and provided in the pores of the coating layer and/or the porous polymer substrate 110.

Alternatively, the second polymer binder 151 is dissolved in a solvent included in the adhesive layer forming slurry, which will be described later, and provided in the pores of the coating layer 130 and/or the porous polymer substrate 110. As described above, since the second polymer binder 151 is selected as a solution type binder, it is possible to improve the adhesion between the porous polymer substrate 110 and the coating layer 130 while allowing the first polymer binder 131 to be selected from either a solution type binder or a particle type binder.

According to an embodiment of the present disclosure, the second polymer binder 151 is a particle type binder. As described above, since the second polymer binder 151 is selected as a particle type binder, the uniformity of the inorganic particles in the coating layer is improved, and the adhesion between the separator and the electrode is improved.

According to an embodiment of the present disclosure, the second polymer binder 151 is an acrylic-based binder, a polyvinylidene-based binder, or a combination thereof. By selecting the second polymer binder from the above, it is possible to improve the adhesion between the electrode and the separator in the lamination process of the battery, so that the battery may be easily manufactured, and the stacking process may be implemented reliably.

According to an embodiment of the present disclosure, the acrylic-based binder is a polymer containing carboxylic acid ester as a repeating unit, for example, (meth)acrylic acid ester or acrylic-styrene copolymer.

According to an embodiment of the present disclosure, examples of the (meth)acrylic acid ester include methyl (meth)acrylate, ethyl (meth)acrylate, n-propyl (meth)acrylate, i-propyl (meth)acrylate, n-butyl (meth)acrylate, i-butyl (meth)acrylate, n-amyl (meth)acrylate, i-amyl (meth)acrylate, hexyl (meth)acrylate, cyclohexyl (meth)acrylate, 2-ethylhexyl (meth)acrylate, n-octyl (meth)acrylate, nonyl (meth)acrylate, decyl (meth)acrylate, hydroxymethyl (meth)acrylate, hydroxyethyl (meth)acrylate, ethylene glycol (meth)acrylate, ethylene glycol di(meth)acrylate, propylene glycol di(meth)acrylate, trimethylolpropane tri(meth)acrylate, pentaerythritol tetra(meth)acrylate, dipentaerythritol hexa(meth)acrylate, allyl (meth)acrylate, and ethylene di(meth)acrylate, and the (meth)acrylic acid ester is one or more selected from these. Among these, the (meth)acrylic acid ester may be one or more selected from methyl (meth)acrylate, ethyl (meth)acrylate, and 2-ethylhexyl (meth)acrylate, or may be methyl (meth)acrylate.

According to an embodiment of the present disclosure, the acrylic-styrene copolymer includes an acrylic-based binder, and the acrylic-based binder is polyacrylate-based. For example, the acrylic-based binder is at least one selected from the group consisting of styrene-butadiene rubber, nitril-butadiene rubber, acrylonitrile-butadiene rubber, acrylonitrile-butadiene-styrene rubber, and acrylate-based polymers, and is, for example, a copolymer containing acrylate.

According to an embodiment of the present disclosure, the polyvinylidene-based binder is a copolymer of polyvinylidene fluoride (PVdF) and hexafluoropropylene (HFP). As described above, by selecting a polyvinylidene-based binder, the porosity of the separator may be maintained, and the adhesion may be maintained even when the coating layer is wetted by the electrolyte after activation of the battery. Furthermore, the stiffness of the battery may be improved, and bending of the separator may be prevented.

According to an embodiment of the present disclosure, the polyvinylidene-based binder is a polyvinylidene-based binder in which the content of hexafluoropropylene (HFP) is about 1% by weight or more and 50% by weight or less. For example, in the polyvinylidene-based binder, the content of hexafluoropropylene (HFP) is about 1% by weight or more and 50% by weight or less, about 2% by weight or more and 45% by weight or less, about 3% by weight or more and 40% by weight or less, about 4% by weight or more and 35% by weight or less, about 5% by weight or more and 30% by weight or less, about 7% by weight or more and 25% by weight or less, or about 10% by weight or more and 20% by weight or less. As described above, by selecting a polyvinylidene-based binder in which the content of hexafluoropropylene is about 1% by weight or more and 50% by weight or less, the porosity of the separator may be maintained, and the adhesion may be maintained even when the coating layer is wetted by the electrolyte after activation of the battery. In an embodiment of the present disclosure, the degree of substitution of the polyvinylidene-based binder refers to a weight ratio containing hexafluoropropylene.

According to an embodiment of the present disclosure, the content of the first polymer binder 131 in the coating layer is about 25 parts by weight or less based on 100 parts by weight of the coating layer 130. For example, the total content of the first polymer binder 131 is in a range of more than about 0 parts by weight and 25 parts by weight or less, about 1 part by weight or more and 24 parts by weight or less, about 2 parts by weight or more and 23 parts by weight or less, about 3 parts by weight or more and 22 parts by weight or less, about 4 parts by weight or more and 21 parts by weight or less, about 5 parts by weight or more and 20 parts by weight or less, about 6 parts by weight or more and 19 parts by weight or less, about 7 parts by weight or more and 18 parts by weight or less, about 8 parts by weight or more and 17 parts by weight or less, about 9 parts by weight or more and 16 parts by weight or less, about 10 parts by weight or more and 15 parts by weight or less, about 11 parts by weight or more and 14 parts by weight or less, or about 12 parts by weight or more and 13 parts by weight or less, based on 100 parts by weight of the coating layer 130. When the content of the first polymer binder 131 is adjusted within the above-mentioned range, ease of assembly is improved in the process of assembling the electrode.

According to an embodiment of the present disclosure, the content of the inorganic particles 133 is more than about 75 parts by weight based on 100 parts by weight of the coating layer 130. For example, the total content of the inorganic particles 133 is more than about 75 parts by weight and less than 100 parts by weight, about 76 part by weight or more and 99 parts by weight or less, about 77 parts by weight or more and 98 parts by weight or less, about 78 parts by weight or more and 97 parts by weight or less, about 79 parts by weight or more and 96 parts by weight or less, about 80 parts by weight or more and 95 parts by weight or less, about 81 parts by weight or more and 94 parts by weight or less, about 82 parts by weight or more and 93 parts by weight or less, about 83 parts by weight or more and 92 parts by weight or less, about 84 parts by weight or more and 91 parts by weight or less, about 85 parts by weight or more and 90 parts by weight or less, about 86 parts by weight or more and 89 parts by weight or less, or about 87 parts by weight or more and 88 parts by weight or less, based on 100 parts by weight of the coating layer 130. When the content of inorganic particles 133 is adjusted within the above-mentioned range, the heat resistance of the separator is improved.

According to an embodiment of the present disclosure, the inorganic particles 133 that may be used in the coating layer 130 are not particularly limited as long as they are electrochemically stable. That is, the inorganic particles that may be used in an embodiment of the present disclosure are not particularly limited as long as they do not undergo oxidation and/or reduction reactions in the operating voltage range of the applied electrochemical device to which they are applied (e.g., about 0 V to 5 V based on Li/Li⁺).

According to an embodiment of the present invention, non-limiting examples of the inorganic particles 133 include BaTiO₃, Pb(Zr,Ti)O₃ (PZT), Pb₁₋ₓLaₓZr_{1-y}Ti_{y}O₃ (PLZT, 0<x<1, 0<y<1), Pb(Mg_{1/3}Nb_{2/3})O₃-PbTiO₃ (PMN-PT), hafnia (HfO₂), SrTiO₃, SnO₂, CeO₂, MgO, Mg(OH)₂, NiO, CaO, ZnO, ZrO₂, SiO₂, Y₂O₃, Al₂O₃, SiC, Al(OH)₃, TiO₂, aluminum peroxide, zinc tin hydroxide (ZnSn(OH)₆), tin-zinc oxide (Zn₂SnO₄, ZnSnO₃), antimony trioxide (Sb₂O₃), antimony tetroxide (Sb₂O₄), and antimony pentoxide (Sb₂O₅), and the inorganic particles 133 includes one or two or more thereof.

According to an embodiment of the present disclosure, the average diameter (D₅₀) of the inorganic particles 133 is not particularly limited, but is preferably in the range of about 0.3 µm or more to 1 µm or less, for the formation of the coating layer 130 having uniform thickness and an appropriate porosity. For example, when the D₅₀ is less than about 0.3 µm, the dispersibility of the inorganic particles in the slurry prepared for manufacturing the coating layer decreases, and when the D₅₀ exceeds about 1 µm, the surface of the formed coating layer becomes uneven or the thickness of the coating layer increases.

In an embodiment of the present disclosure, "D₅₀ particle size" means the particle size at 50% of the cumulative distribution of particle counts according to particle size. The particle size is measured using a laser diffraction method. For example, powder to be measured is dispersed in a dispersion medium and then introduced into a commercially available laser diffraction particle diameter measuring device (*e.g.,* Microtrac S3500) to measure the difference in diffraction patterns depending on the particle diameter when the particles pass through the laser beam, thereby calculating the particle diameter distribution. The D₅₀ particle size may be measured by calculating a particle diameter at a point that is 50% of the particle counts cumulative distribution according to particle diameter in the measuring device.

According to an embodiment of the present disclosure, the porosity of the coating layer 130 may be about 30% by volume or more. For example, the porosity of the coating layer 130 is about 30% by volume or more and 70% by volume or less, about 32% by volume or more and 68% by volume or less, about 34% by volume or more and 66% by volume or less, about 36% by volume or more and 64% by volume or less, about 38% by volume or more and 62% by volume or less, about 40% by volume or more and 60% by volume or less, about 42% by volume or more and 58% by volume or less, about 44% by volume or more and 56% by volume or less, about 46% by volume or more and 54 volume % or less, or about 48 vol% or more and 52 vol% or less. When the porosity of the coating layer 130 is adjusted within the above-mentioned range, it is possible to maintain the movement of ions in the separator and prevent an increase in resistance of the separator. For example, when the porosity is about 70% by volume or less, mechanical properties capable of withstanding the press process of bonding to the electrode may be secured, and the surface opening ratio is not too high, making it suitable for securing adhesion. Meanwhile, when the porosity is about 30% by volume or more, it is advantageous from the viewpoint of ion permeability.

In an embodiment of the present disclosure, the term "porosity" refers to a ratio of the volume occupied by pores to the total volume, uses % by volume as its unit, and may be used interchangeably with the terms void fraction, and the like.

In an embodiment of the present disclosure, the "porosity" corresponds to a value obtained by subtracting the volume converted by the weight and density of each component of the coating layer 130 from the volume calculated by the thickness, length, and width of the coating layer 130.

In an embodiment of the present disclosure, the porosity and pore size of the coating layer 130 are measured using a scanning electron microscope (SEM) image, a mercury porosimeter, a capillary flow porometer, or using a porosimetry analyzer (Porosimetry analyzer; Bell Japan Inc, Belsorp-II mini) by the BET 6-point method by the nitrogen gas adsorption distribution method. In this case, it is advantageous to use a capillary flow porometer.

An embodiment of the present disclosure provides a method of manufacturing the separator 100 for an electrochemical device, the method including: a step S20 of providing the coating layer 130 by applying a coating layer forming slurry including the first polymer binder 131 and the inorganic particles 133 onto at least one surface of the porous polymer substrate 110; and a step S50 of providing the adhesive layer 150 by applying an adhesive layer forming slurry including the first polymer binder 131 and the second polymer binder 151 onto the coating layer 130.

The method of manufacturing the separator 100 for an electrochemical device according to an embodiment of the present disclosure improves the dispersibility of inorganic particles and polymer binder by maintaining the viscosity of the coating layer forming slurry at a low level.

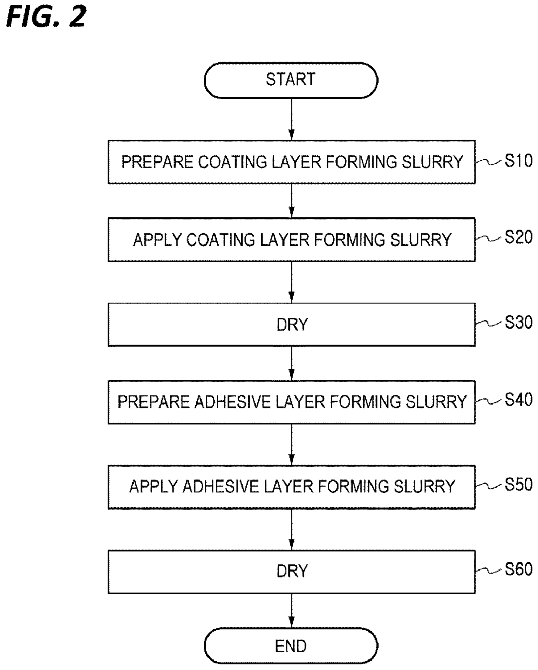

FIG. 2 is a flowchart of a method of manufacturing the separator 100 for an electrochemical device according to an embodiment of the present disclosure. Referring to FIG. 2, a method of manufacturing the separator 100 for an electrochemical device according to an embodiment of the present disclosure will be described. In the description of the method of manufacturing the separator 100 for an electrochemical device according to an embodiment of the present disclosure, contents that overlap with the description of the separator for an electrochemical device will be omitted.

According to an embodiment of the present disclosure, the method includes a step S10 of preparing a coating layer forming slurry containing the first polymer binder 131 and the inorganic particles 133 before the step S20 of providing the coating layer 130. In the step S10 of preparing the coating layer forming slurry as described above, the viscosity of the coating layer forming slurry may be implemented to be low, thereby improving the dispersibility of the inorganic particles in the slurry and improving the uniformity of the coating layer.

According to an embodiment of the present disclosure, the method includes the step S20 of applying the coating layer forming slurry containing the first polymer binder 131 and the inorganic particles 133 onto at least one surface of the porous polymer substrate 110 to provide the coating layer 130. As described above, by including the step S20 of applying the coating layer forming slurry containing the first polymer binder 131 and the inorganic particles 133 onto at least one surface of the porous polymer substrate 110 to provide the coating layer 130, the coating layer 130 may be formed in a single application, and the coating layer forming slurry improves the uniformity of the coating layer by uniformly dispersing the inorganic particles.

According to an embodiment of the present disclosure, the method includes a step S40 of preparing an adhesive layer forming slurry containing the first polymer binder 131 and the second polymer binder 151 before the step S50 of providing the adhesive layer 150. As described above, by including the step S40 of preparing the adhesive layer forming slurry containing the first polymer binder 131 and the second polymer binder 151 before the step S50 of providing the adhesive layer 150, a low content (10% by weight or less) of the first polymer binder may be contained in the coating layer forming slurry, thereby reducing the viscosity of the coating layer forming slurry and improving the dispersibility of the inorganic particles in the coating layer forming slurry.

According to an embodiment of the present disclosure, the method includes the step S50 of applying the adhesive layer forming slurry containing the first polymer binder 131 and the second polymer binder 151 onto the coating layer 130 to provide the adhesive layer 150. The adhesive layer 150 may be formed with a single application, and the first polymer binder, which is a liquid dissolved in the adhesive layer forming slurry, moves into the pores of the coating layer, thereby enabling the first polymer binder to be excessively deposited on the porous polymer substrate.

According to an embodiment of the present disclosure, the method of applying the coating layer forming slurry onto the surface of the porous polymer substrate 110 and the method of applying the adhesive layer forming slurry onto the surface of the coating layer 130 are not particularly limited to one method, and any conventional method known in the art may be used. For example, various methods such as dip coating, die coating, roll coating, comma coating, gravure, or a combination thereof may be used.

According to an embodiment of the present disclosure, drying steps (S30 and S60) are further included after the step S20 of providing the coating layer 130 and the step S50 of providing the adhesive layer 150, respectively. As described above, by further including the drying steps (S30 and S60) after the step of providing the coating layer 130 (S20) and the step of providing the adhesive layer 150 (S50), respectively, it is possible to minimize damage to the coating layer and easily remove the solvent contained in the slurry.

Meanwhile, the sequence of the method for manufacturing the above-described separator 100 for an electrochemical device may be carried out with appropriate variation. For example, the step S40 of preparing the adhesive layer forming slurry may be performed at the same time as the step S10 of preparing the coating layer forming slurry.

According to an embodiment of the present disclosure, in the drying process, time conditions are appropriately set to minimize the occurrence of surface defects in the coating layer 130 and/or the adhesive layer 150. For the drying, a drying auxiliary device such as a drying oven or hot air may be used within an appropriate range.

According to an embodiment of the present disclosure, the first polymer binder 131 and the inorganic particles 133 are dissolved and dispersed in a solvent to prepare a coating layer forming slurry. The solvent is preferably one that has a solubility index similar to that of the binder polymer to be used and a low boiling point. This is to facilitate uniform mixing and subsequent solvent removal. Non-limiting examples of solvents that can be used include acetone, tetrahydrofuran, methylene chloride, chloroform, dimethylformamide, N-methyl-2-pyrrolidone (NMP), cyclohexane, water, or mixtures thereof. For example, the solvent is water. The content ratio of the inorganic particles and polymer binder particles is as described hereinafter and is appropriately adjusted in consideration of the thickness, pore size, and porosity of the coating layer according to an embodiment of the present disclosure to be finally produced.

According to an embodiment of the present disclosure, the polymer binder resin, that is, the first polymer binder 131 and the second polymer binder 151 are dispersed and dissolved in an appropriate solvent to prepare an adhesive layer forming slurry. The solvent is preferably one that has a solubility index similar to that of the binder polymer to be used and a low boiling point. This is to facilitate uniform mixing and subsequent solvent removal. Non-limiting examples of solvents that can be used include acetone, tetrahydrofuran, methylene chloride, chloroform, dimethylformamide, N-methyl-2-pyrrolidone (NMP), cyclohexane, water, or mixtures thereof. For example, the solvent is water.

According to an embodiment of the present disclosure, the content of the first polymer binder 131 dissolved in a solvent in the coating layer forming slurry is about 0.1% by weight or more and 10% by weight or less. For example, the content of the first polymer binder 131 dissolved in the solvent in the coating layer forming slurry is about 0.2% by weight or more and 9.9% by weight or less, about 0.3% by weight or more and 9.8% by weight or less, about 0.4% by weight or more and 9.7% by weight or less, about 0.5% by weight or more and 9.6% by weight or less, about 0.6% by weight or more and 9.5% by weight or less, about 0.7% by weight or more and 9.4% by weight or less, about 0.8% by weight or more and 9.3% by weight or less, about 0.9% by weight or more and 9.2% by weight or less, about 1.0% by weight or more and 9.1% by weight or less, about 1.1% by weight or more and 9.0% by weight or less, about 1.2% by weight or more and 8.9% by weight or less, about 1.3% by weight or more and 8.8% by weight or less, about 1.4% by weight or more and 8.7% by weight or less, about 1.5% by weight or more and 8.6% by weight or less, about 1.6% by weight or more and 8.5% by weight or less, about 1.7% by weight or more and 8.4% by weight or less, about 1.8% by weight or more and 8.3% by weight or less, about 1.9% by weight or more and 8.2% by weight or less, about 2.0% by weight or more and 8.1% by weight or less, about 2.1% by weight or more and 8.0% by weight or less, about 2.2% by weight or more and 7.9% by weight or less, about 2.3% by weight or more and 7.8% by weight or less, about 2.4% by weight or more and 7.7% by weight or less, about 2.5% by weight or more and 7.6% by weight or less, about 2.6% by weight or more and 7.5% by weight or less, about 2.7% by weight or more and 7.4% by weight or less, about 2.8% by weight or more and 7.3% by weight or less, about 2.9% by weight or more and 7.2% by weight or less, about 3.0% by weight or more and 7.1% by weight or less, about 3.1% by weight or more and 7.0% by weight or less, about 3.2% by weight or more and 6.9% by weight or less, about 3.3% by weight or more and 6.8% by weight or less, about 3.4% by weight or more and 6.7% by weight or less, about 3.5% by weight or more and 6.6% by weight or less, about 3.6% by weight or more and 6.5% by weight or less, about 3.7% by weight or more and 6.4% by weight or less, about 3.8% by weight or more and 6.3% by weight or less, about 3.9% by weight or more and 6.2% by weight or less, about 4.0% by weight or more and 6.1% by weight or less, about 4.1% by weight or more and 6.0% by weight or less, about 5.2% by weight or more and 5.9% by weight or less, about 5.3% by weight or more and 5.8% by weight or less, about 5.4% by weight or more and 5.7% by weight or less, or about 5.5% by weight or more and 5.6% by weight or less. When the content of the first polymer binder 131 dissolved in the solvent in the coating layer forming slurry is adjusted within the above-mentioned range, the bonding force of the coating layer is improved.

According to an embodiment of the present disclosure, the coating layer forming slurry further includes a dispersant. For example, the dispersant is sodium carboxymethyl cellulose. As described above, the coating layer forming slurry further includes a dispersant, thereby improving the degree of dispersion of the inorganic particles contained in the coating layer forming slurry.

According to an embodiment of the present disclosure, the content of the dispersant is about 1% by weight or more and 5% by weight or less based on the total content excluding the solvent included in the coating layer forming slurry. When the content of the dispersant in the coating layer forming slurry is adjusted within the above-mentioned range, the degree of dispersion of the inorganic particles contained in the coating layer forming slurry is improved.

According to an embodiment of the present disclosure, the content of the first polymer binder 131 dissolved in the solvent in the adhesive layer forming slurry is about 5% by weight or more and 40% by weight or less. For example, the content of the first polymer binder 131 dissolved in a solvent in the adhesive layer forming slurry is about 6% by weight or more and 39% by weight or less, about 7% by weight or more and 38% by weight or less, about 9% by weight or more and 37 parts by weight or less, about 10% by weight or more and 36% by weight or less, about 11% by weight or more and 35% by weight or less, about 12% by weight or more and 34% by weight or less, about 13% by weight or more and 32% by weight or less, about 14% by weight or more and 31% by weight or less, about 15% by weight or more and 30% by weight or less, about 16% by weight or more and 29% by weight or less, about 17% by weight or more and 28% by weight or less, about 19% by weight or more and 27% by weight or less, about 20% by weight or more and 26% by weight or less, about 21% by weight or more and 25% by weight or less, or about 22% by weight or more and 24% by weight or less. When the content of the first polymer binder 131 dissolved in the solvent in the adhesive layer forming slurry is adjusted within the above-mentioned range, the adhesion between the porous polymer substrate and the coating layer is improved.

According to an embodiment of the present disclosure, the content of the second polymer binder 151 in the adhesive layer forming slurry is about 30% by weight or more and 95% by weight or less. For example, the content of the second polymer binder 151 in the adhesive layer forming slurry is about 35% by weight or more and 90% by weight or less, about 40% by weight or more and 85% by weight or less, about 45% by weight or more and 80% by weight or less, about 50% by weight or more and 75% by weight or less, about 55% by weight or more and 70% by weight or less, or about 60% by weight or more and 65% by weight or less. When the content of the second polymer binder 151 in the adhesive layer forming slurry is adjusted within the above-mentioned range, the adhesion between the electrode and the separator is improved.

According to an embodiment of the present disclosure, the viscosity of the coating layer forming slurry may be about 20 cp or more and 40 cp or less. For example, the viscosity of the coating layer forming slurry is about 21 cp or more and 39 cp or less, about 22 cp or more and 38 cp or less, about 23 cp or more and 37 cp or less, about 24 cp or more and 36 cp or less, about 25 cp or more and 35 cp or less, about 26 cp or more and 34 cp or less, about 27 cp or more and 33 cp or less, about 28 cp or more and 32 cp or less, or about 29 cp or more and 31 cp or less. When the viscosity of the coating layer forming slurry is adjusted within the above-mentioned range, the dispersibility of the inorganic particles in the coating layer forming slurry may be improved, and the uniformity of the coating layer is improved.

According to an embodiment of the present disclosure, an average particle diameter (D₉₀) of the inorganic particles included in the coating layer forming slurry is about 0.01 µm or more and 10.0 µm or less. When the average particle diameter (D₉₀) of the inorganic particles included in the coating layer forming slurry is adjusted within the above-mentioned range, the thickness of the coating layer may be reduced, and the dispersibility of the coating layer forming slurry is improved.

In an embodiment of the present disclosure, "D₉₀ particle size" means the particle size at 90% of the cumulative distribution of particle counts according to particle size. The particle size is measured using a laser diffraction method. For example, powder to be measured is dispersed in a dispersion medium and then introduced into a commercially available laser diffraction particle diameter measuring device (*e.g.,* Microtrac S3500) to measure the difference in diffraction patterns depending on the particle diameter when the particles pass through the laser beam, thereby calculating the particle diameter distribution. The D₉₀ particle size may be measured by calculating a particle diameter at a point that is 90% of the particle counts cumulative distribution according to particle diameter in the measuring device.

According to an embodiment of the present disclosure, the separator 100 for the electrochemical device is manufactured as an electrochemical device through a lamination process in which the separator 100 for the electrochemical device is interposed between the negative electrode and the positive electrode and bonded by applying heat and/or pressure. In an embodiment of the present disclosure, the lamination process is performed by a roll press device including a pair of pressure rollers. That is, the negative electrode, the separator, and the positive electrode are sequentially stacked and placed between the pressure rollers to achieve interlayer bonding. At this time, the lamination process is performed by hot pressing.

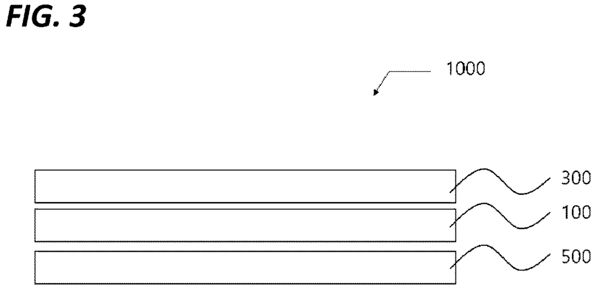

FIG. 3 is a schematic diagram of an electrochemical device 1000 according to an embodiment of the present disclosure. Referring to FIGS. 1 and 3, the electrochemical device 1000 according to an embodiment of the present disclosure will be described.

According to an embodiment of the present disclosure, the electrochemical device 1000 includes: a positive electrode 300; a negative electrode 500; and the separator 100 for the electrochemical device that is interposed between the positive electrode 300 and the negative electrode 500, in which an adhesion between the porous polymer substrate 110 and the coating layer 130 is about 30 gf/25 mm or more.

The electrochemical device 1000 according to an embodiment of the present disclosure improves the adhesion between the coating layer 130 and the porous polymer substrate 110 and improves the adhesion between the separator 100 for the electrochemical device and the electrodes.

According to an embodiment of the present disclosure, the electrochemical device 1000 includes the positive electrode 300; the negative electrode 500; and the separator 100 for the electrochemical device interposed between the positive electrode 300 and the negative electrode 500. As described above, by including the positive electrode 300; the negative electrode 500; and the separator 100 for the electrochemical device interposed between the positive electrode 300 and the negative electrode, the uniformity of the coating layer is improved, and the adhesion between the coating layer and the porous polymer substrate is improved.

According to an embodiment of the present disclosure, the adhesion between the porous polymer substrate 110 and the coating layer 130 is about 30 gf/25 mm or more. For example, the adhesion between the porous polymer substrate 110 and the coating layer 130 is about 30 gf/25 mm or more and 100 gf/25 mm or less, about 35 gf/25 mm or more and 95 gf/25 mm or less, about 40 gf/25 mm or more and 90 gf/25 mm or less, about 45 gf/25 mm or more and 85 gf/25 mm or less, about 50 gf/25 mm or more and 80 gf/25 mm or less, about 55 gf/25 mm or more and 75 gf/25 mm or less, or about 60 gf/25 mm or more and 70 gf/25 mm or less. Alternatively, the adhesion means dry adhesion. When the adhesion between the porous polymer substrate 110 and the coating layer 130 is adjusted within the above-mentioned range, ease of assembly is improved in the process of assembling the electrode.

In an embodiment of the present disclosure, the "adhesion" is to measure electrode/separator adhesion of the separator by adhering the electrode and the separator at 60 °C and 6.5 MPa to prepare a half cell, applying force to the half cell at 180° and a measurement speed of 300 mm/min using UTM equipment, and measuring the force required to separate the electrode and the separator.

According to an embodiment of the present disclosure, the adhesion between the porous polymer substrate 110 and the coating layer 130 is about 5 gf/25 mm or more greater than an adhesion between the adhesive layer 150 and either the positive electrode 300 or the negative electrode 500. For example, the adhesion between the porous polymer substrate 110 and the coating layer 130 is about 5 gf/25 mm more and 100 gf/25 mm or less, about 10 gf/25mm or more and 95 gf/25 mm or less, about 15 gf/25 mm or more and 90 gf/25 mm or less, about 20 gf/25 mm or more and 85 gf/25 mm or less, about 25 gf/25 mm or more and 80 gf/25 mm or less, about 30 gf/25 mm or more and 75 gf/25 mm or less, about 35 gf/25 mm or more and 70 gf/25 mm or less, about 40 gf/25 mm or more and 65 gf/25 mm or less, about 45 gf/25 mm or more and 60 gf/25 mm or less, or about 50 gf/25 mm or more and 55 gf/25 mm or less greater than the adhesion between the adhesive layer 150 and either the positive electrode 300 or the negative electrode 500. When the difference in adhesion between the adhesion between the porous polymer substrate 110 and the coating layer 130 and the adhesion between the adhesive layer 150 and either the positive electrode 300 or the negative electrode 500 is adjusted within the above-mentioned range, the adhesion between the separator 100 for the electrochemical device and the electrodes is improved.

According to an embodiment of the present disclosure, the positive electrode 300 includes a positive electrode collector and a positive electrode active material layer containing a positive electrode active material, a conductive material, and a binder resin on at least one surface of the collector. The positive electrode active material includes layered compounds such as lithium manganese composite oxide (e.g., LiMn₂O₄ and LiMnO₂), lithium cobalt oxide (LiCoO₂), and lithium nickel oxide (LiNiO₂), or a compound substituted with one or more transition metal elements; lithium manganese oxides represented by the formulas Li₁₊ₓMn₂₋ₓO₄ (where x is 0 to 0.33), LiMnO₃, LiMn₂O₃, or LiMnO₂; lithium copper oxide (Li₂CuO₂); vanadium oxides such as LiV₃O₈, LiV₃O₄, V₂O₅, Cu₂V₂O₇; Ni-site type lithium nickel oxides represented by the formula LiNi₁₋ₓMₓO₂ (where M = Co, Mn, Al, Cu, Fe, Mg, B, or Ga, and x = 0.01 to 0.3); lithium manganese complex oxides represented by the formula LiMn₁₋ₓMₓO₂ (where M = Co, Ni, Fe, Cr, Zn, or Ta, and x = 0.01 to 0.1) or Li₂Mn₃MO₈ (where M = Fe, Co, Ni, Cu, or Zn); LiMn₂O₄ in which some of Li in the formula is replaced with an alkaline earth metal ion; disulfide compounds; Fe₂(MoO₄)₃, which may be used alone or in mixture of two or more thereof.

According to an embodiment of the present disclosure, the negative electrode 500 includes a negative electrode collector and a negative electrode active material layer containing a negative electrode active material, a conductive material, and a binder resin on at least one surface of the collector. The negative electrode active material in the negative electrode includes lithium metal oxide, carbon such as hard carbon and graphitic carbon; metal complex oxides such as LiₓFe₂O₃ (0≤x≤1), LiₓWO₂ (0≤x≤1), SnₓMe₁₋ₓMe'_{y}O_{z} (Me: Mn, Fe, Pb, Ge; Me': Al, B, P, Si, elements of groups 1, 2, and 3 of the periodic table, halogen; 0<x≤1; 1≤y ≤3; 1≤z≤8); lithium metal; lithium alloy; silicon-based alloy; tin-based alloy; metal oxides such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, and Bi₂O₅; conductive polymers such as polyacetylene; Li-Co-Ni-based materials; and titanium oxide, which may be used alone or in mixture of two or more thereof.

According to an embodiment of the present disclosure, the conductive material may be any one or a mixture of two or more conductive materials selected from the group consisting of, for example, graphite, carbon black, carbon fiber or metal fiber, metal powder, conductive whisker, conductive metal oxide, activated carbon, and polyphenylene derivative. For example, the conductive material may be one selected from the group consisting of natural graphite, artificial graphite, super-p, acetylene black, Ketjen black, channel black, furnace black, lamp black, thermal black, denka black, aluminum powder, nickel powder, zinc oxide, potassium titanate and titanium oxide, or a mixture of two or more thereof.

According to an embodiment of the present disclosure, the collector is not particularly limited as long as it is conductive without causing chemical changes in the battery, and examples thereof include stainless steel, aluminum, nickel, titanium, calcined carbon, or aluminum or stainless steel subjected to surface treatment with carbon, nickel, titanium, or silver.

According to an embodiment of the present disclosure, a polymer commonly used in electrodes in the art is used as the binder resin. Non-limiting examples of the binder resin include polyvinylidene fluoride-co-hexafluoropropylene, polyvinylidene fluoride-co-trichloroethylene, poly(methyl methacrylate), poly(ethylhexyl acrylate), poly(butyl acrylate), polyacrylonitrile, polyvinylpyrrolidone, polyvinyl acetate, polyethylene-co-vinyl acetate, polyethylene oxide, polyarylate, cellulose acetate, cellulose acetate butyrate, cellulose acetate propionate, cyanoethyl pullulan, cyanoethyl polyvinyl alcohol, cyanoethyl cellulose, cyanoethyl sucrose, pullulan, and carboxyl methyl cellulose, but is not limited thereto.

According to an embodiment of the present disclosure, the positive electrode slurry for preparing the positive electrode active material layer includes a dispersant, and the dispersant is a pyrrolidone-based compound. Alternatively, the dispersant is N-methylpyrrolidone (ADC-01, LG Chemical).

According to an embodiment of the present disclosure, the content of the dispersant included in the positive electrode slurry may be greater than about 0 parts by weight and less than or equal to 0.5 parts by weight based on 100 parts by weight of the positive electrode slurry. For example, the content of the dispersant included in the positive electrode slurry is greater than about 0.05 parts by weight and less than or equal to 0.4 parts by weight based on 100 parts by weight of the positive electrode slurry.

According to an embodiment of the present disclosure, the negative electrode slurry for preparing the negative electrode active material layer includes a dispersant, and the dispersant is a polypyrrolidone-based compound. For example, the dispersant is polyvinylpyrrolidone (Junsei, Japan).

According to an embodiment of the present disclosure, the content of the dispersant included in the negative electrode slurry is more than about 0 parts by weight and less than or equal to 0.5 parts by weight based on 100 parts by weight of the negative electrode slurry. For example, the content of the dispersant included in the negative electrode slurry is more than about 0.05 parts by weight and less than or equal to 0.4 parts by weight based on 100 parts by weight of the negative electrode slurry.

According to an embodiment of the present disclosure, the electrochemical device prepared as described above is placed in an appropriate case, and an electrolyte solution is injected to manufacture a battery.

According to an embodiment of the present disclosure, the electrolyte may be one obtained by dissolving or dissociating a salt with a structure such as A⁺B⁻, in which A⁺ includes an alkali metal cation such as Li⁺, Na⁺, or K⁺, or a combination thereof, and B⁻ includes an anion such as PF₆⁻, BF₄⁻, Cl⁻, Br⁻, I⁻, ClO₄⁻, AsF₆⁻, CH₃CO₂⁻, CF₃SO₃⁻, N(CF₃SO₂)₂⁻, or C(CF₂SO₂)₃⁻, or a combination thereof, in an organic solvent such as propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethylmethyl carbonate (EMC), γ-butyrolactone, or a mixture thereof, but not limited thereto.

In an embodiment of the present disclosure, the separator for an electrochemical device of the present disclosure may be similarly applied to lithium secondary batteries or sodium secondary batteries manufactured using lithium ions or sodium ions as a positive electrode active material including the separator for an electrochemical device.

Furthermore, unlike the lithium secondary battery described above, the lithium secondary battery according to another embodiment of the present invention is an all-solid-state battery.

An embodiment of the present disclosure provides a battery module including a battery including the electrochemical device as a unit battery, a battery pack including the battery module, and a device including the battery pack as a power source. Examples of the device include a power tool that is powered by an all-electric motor; electric cars including electric vehicles (EVs), hybrid electric vehicles (HEVs), plug-in hybrid electric vehicles (PHEVs), etc.; electric two-wheeled vehicles including electric bicycles (E-bikes) and electric scooters (E-scooters); electric golf cart; and power storage systems.

### [Mode for Invention]

Hereinafter, the present disclosure will be described in detail using examples. However, the Examples according to the present disclosure may be modified into various other forms, and the scope of the present disclosure should not be construed as being limited to the examples described below. The examples of the present disclosure are provided to more completely explain the present disclosure to those skilled in the art.

### <Example 1>

Polyethylene resin (weight average molecular weight: 900,000) was extruded, and a porous polymer substrate (total thickness: about 9 µm, porosity: 40% by volume) was manufactured by a wet method.

Al₂O₃ powder with a D₅₀ particle size of 600 nm was prepared as inorganic particles. Polyacrylic acid (K-702, Lubrizol) was prepared as the first polymer binder, and sodium carboxymethyl cellulose (CMC-Na) (SG-L02, GL Chem) was prepared as a dispersant.

The prepared inorganic particles, first polymer binder, and dispersant were added to water in a weight ratio of 92:5:3, and then the inorganic particles were crushed and dispersed to prepare a coating layer forming slurry.

The coating layer forming slurry was applied to both sides of the porous polymer substrate by bar coating using a doctor blade and dried with wind at 50 °C using a heat gun to form a coating layer.

Polyacrylic acid (K-702, Lubrizol), which is a polyacrylate copolymer, as the first polymer binder, and acrylic emulsion (BM-2510M, Zeon) as the second polymer binder were added and dispersed in water as a solvent at a weight ratio of 90:10 to prepare an adhesive layer forming slurry (solid content: 5% by weight).

The adhesive layer forming slurry was applied onto the coating layer by a bar coating method and then dried to form an adhesive layer, thereby preparing a separator for an electrochemical device.

The separator for the electrochemical device was prepared by applying the adhesive layer forming slurry on both sides by a bar coating method using a doctor blade to the surface of the coating layer and drying with a wind at 50 °C using a heat gun to form an adhesive layer.

### <Comparative Example 1>

A separator was prepared in the same manner as in Example 1, except that a coating layer forming slurry was prepared using the inorganic particles, the first polymer binder, and the dispersant in a weight ratio of 85:12:3 in the separator for the electrochemical device of Example 1.

### <Comparative Example 2>

A separator was prepared in the same manner as in Example 1, except that a coating layer forming slurry was prepared using the inorganic particles, the first polymer binder, and the dispersant in a weight ratio of 97:0:3 in the separator for the electrochemical device of Example 1.

### <Comparative Example 3>

A separator was prepared in the same manner as in Example 1, except that an adhesive layer forming slurry was prepared using the first polymer binder and the second polymer binder in a weight ratio of 3:97 in the separator for the electrochemical device of Example 1.

### <Comparative Example 4>

A separator was prepared in the same manner as Example 1, except that an adhesive layer was not formed in the separator for the electrochemical device of Example 1.

### <Comparative Example 5>

A separator was prepared in the same manner as in Example 1, except that an adhesive layer forming slurry was prepared to include only the second polymer binder in the separator for the electrochemical device of Example 1.

### <Comparative Example 6>

A separator was prepared in the same manner as in Example 1, except that an adhesive layer forming slurry was prepared to include only the first polymer binder in the separator for the electrochemical device of Example 1.

### <Preparation of Electrochemical Device>

### 1) Preparation of Positive Electrode

A positive electrode active material (LiNi_{0.8}Mn_{0.1}Co_{0.1}O₂), a conductive material (carbon black), a dispersant (N-methylpyrrolidone, ADC-01, LG Chemical), and a binder resin (a mixture of PVDF-HFP and PVDF) were mixed with water in a weight ratio of 97.5:0.7:0.14:1.66 to prepare a slurry for a positive electrode active material layer with a concentration of 50 wt% of the remaining components except water. Next, the slurry was applied to the surface of an aluminum thin film (thickness 10 µm) and dried to prepare a positive electrode having a positive electrode active material layer (thickness 120 µm).

### 2) Preparation of Negative Electrode

Graphite (a blend of natural graphite and artificial graphite), a conductive material (carbon black), a dispersant (polyvinylpyrrolidone, Junsei, Japan), and a binder resin (a mixture of PVDF-HFP and PVDF) were mixed with water in a weight ratio of 97.5:0.7:0.14:1.66 to prepare a slurry for a negative electrode active material layer with a concentration of 50 wt% of the remaining components except water. Next, the slurry was applied to the surface of a copper thin film (thickness 10 µm) and dried to prepare a negative electrode having a negative electrode active material layer (thickness 120 µm).

### 3) Lamination Process

Each of the separators of the example and the comparative examples were interposed between the negative electrode and the positive electrode prepared above, and subjected to a lamination process to obtain an electrode assembly. The lamination process was performed for 1 second at a temperature of 60 °C and 6.5 MPa using a hot press.

### <Experimental Example 1: Measurement of adhesion between electrode and separator>

Each of the separators of Example 1 and Comparative Examples 1 to 6 was cut into 70 mm (length) x 25 mm (width), and the prepared negative electrode and the separator were laminated using a press at 60 ° C., 6.5 MPa, and 1 second to prepare a specimen. The prepared specimen was attached and fixed to a glass plate using double-sided tape while being disposed such that the negative electrode faced the glass plate. The separator portion of the specimen was peeled at an angle of 180° at a speed of 150 mm/min at 25 °C, and the strength at this time was measured and summarized in Table 1 below.

### <Experimental Example 2: Measurement of adhesion between porous polymer substrate and coating layer>

Each of the separators of Example 1 and Comparative Examples 1 to 6 was cut into 70 mm (length) x 25 mm (width), and the prepared separator was attached and fixed to a glass plate using double-sided tape. The separator portion of the specimen was peeled at an angle of 180° at a speed of 150 mm/min at 25 °C, and the strength at this time was measured and summarized in Table 1 below.

### <Experimental Example 3: Measurement of particle size of particles contained in coating layer forming slurry>

The coating layer forming slurry prepared during the preparation of the separators of Example 1 and Comparative Examples 1 to 6 was dispersed in a dispersion medium and introduced into a laser diffraction particle size measurement device (Microtrac S3500) to measure the difference in diffraction pattern according to the particle size when the particles passed through the laser beam, and the particle size distribution was calculated and summarized in Table 1 below.

### <Experimental Example 4: Measurement of viscosity of coating layer forming slurry>

The viscosity of the coating layer forming slurry prepared during the preparation of the separators of Example 1 and Comparative Examples 1 to 6 was measured using Brookfield's LV DV-II + Pro Viscometer (cone-plate type, torque 90%, spindle #42, sample loading volume 1 mL) at 25 °C and is summarized in Table 1 below.

### <Experimental Example 5: Measurement of number of defects>

Each of the separators of Example 1 and Comparative Examples 1 to 6 above was cut to 0.5 m X 0.5 m, and the number of defects larger than 1 µm was counted using an optical microscope, converted to pcs/m², and summarized in Table 1 below.

**Table 1**

| | Adhesion between electrode and separator (gf/25 mm) | Adhesion between porous polymer substrate and coating layer (gf/25 mm) | Particle size of coating layer forming slurry (D₉₀, µm) | Viscosity of coating layer forming slurry (cp) | Number of defects (pcs/m²) |
|---|---|---|---|---|---|
| Example 1 | 32 | 54 | 1.1 | 28 | 0 |
| Comparative Example 1 | 35 | 61 | 15.4 | 89 | 37 |
| Comparative Example 2 | 15 | 33 | 1.0 | 25 | 0 |
| Comparative Example 3 | 13 | 22 | 1.1 | 28 | 0 |
| Comparative Example 4 | 0 | 30 | 1.1 | 28 | 0 |
| Comparative Example 5 | 11 | 19 | 1.1 | 28 | 0 |
| Comparative Example 6 | 0 | 94 | 1.1 | 28 | 0 |

Referring to Table 1, it was confirmed that Example 1, which is an embodiment of the present invention, includes an appropriate amount of the first polymer binder included in the coating layer, so that both the adhesion between the electrode and the separator and the adhesion between the porous polymer substrate and the coating layer are improved and the number of defects is zero.

Meanwhile, in Comparative Example 1, it was confirmed that an excessive amount of the first polymer binder was included in the coating layer, and thus the number of defects was rapidly increased and the viscosity of the coating layer forming slurry was increased. In Comparative Example 2, it was confirmed that the first polymer binder was not included in the coating layer, and thus both the adhesion between the electrode and the separator and the adhesion between the porous polymer substrate and the coating layer were degraded. In Comparative Example 3, it was confirmed that a small amount of the first polymer binder and an excessive amount of the second polymer binder were included in the adhesive layer, and thus both the adhesion between the electrode and the separator and the adhesion between the porous polymer substrate and the coating layer were degraded. In Comparative Example 4, it was confirmed that the adhesive layer was not included, and thus the adhesion between the electrode and the separator was rapidly degraded. In Comparative Example 5, it was confirmed that only the second polymer binder was included in the adhesive layer, and thus both the adhesion between the electrode and the separator and the adhesion between the porous polymer substrate and the coating layer were degraded. Further, in Comparative Example 6, it was confirmed that only the first polymer binder was included in the adhesive layer, and thus the adhesion between the electrode and the separator was rapidly degraded.

Therefore, the separator for an electrochemical device and the electrochemical device including the same according to an embodiment of the present disclosure reduce the number of defects and improve both the adhesion between the electrode and the separator and the adhesion between the porous polymer substrate and the coating layer by controlling the type and content of the polymer binder included in the coating layer and the adhesive layer, and improve workability by implementing a low viscosity of the slurry in the manufacturing process.

An embodiment of the present disclosure provides a separator for an electrochemical device, the separator including: a porous polymer substrate; a coating layer provided on at least one surface of the porous polymer substrate and including a first polymer binder and inorganic particles; and an adhesive layer provided on the coating layer and including a second polymer binder, in which the first polymer binder is a solution type binder, and a content of the first polymer binder included in a portion of the coating layer adjacent to the porous polymer substrate is greater than a content of the first polymer binder included in another portion facing away from the porous polymer substrate.

According to an embodiment of the present disclosure, a solubility of the second polymer binder in water is lower than a solubility of the first polymer binder in water.

According to an embodiment of the present disclosure, the first polymer binder is selected from the group consisting of polyacrylic acid, polyurethane, polyacrylonitrile, polyethylene glycol, polyacrylamide, polyvinyl alcohol, and combinations thereof.

According to an embodiment of the present disclosure, the second polymer binder is a particle type binder.

An embodiment of the present disclosure provides a method of manufacturing the separator for an electrochemical device, the method including providing a coating layer by applying a coating layer forming slurry including a first polymer binder and inorganic particles onto at least one surface of a porous polymer substrate; and providing an adhesive layer by applying an adhesive layer forming slurry including a first polymer binder and a second polymer binder onto the coating layer.

According to an embodiment of the present disclosure, the method further includes drying the coating layer after the providing the coating layer; and drying the adhesive layer after the providing the adhesive layer.

According to an embodiment of the present disclosure, a content of the first polymer binder dissolved in a solvent in the coating layer forming slurry is 0.1% by weight or more and 10% by weight or less.

According to an embodiment of the present disclosure, a content of the second polymer binder dissolved in a solvent in the adhesive layer forming slurry is 5% by weight or more and 40% by weight or less.

According to an embodiment of the present disclosure, an average particle diameter (D₉₀) of the inorganic particles included in the coating layer forming slurry is 0.01 µm or more and 10.0 µm or less.

An embodiment of the present disclosure provides an electrochemical device including: a positive electrode; a negative electrode; and the separator for an electrochemical device that is interposed between the positive electrode and the negative electrode, in which an adhesion between the porous polymer substrate and the coating layer of the separator is 30 gf/25 mm or more.

According to an embodiment of the present disclosure, the adhesion between the porous polymer substrate and the coating layer is 5 gf/25 mm or more greater than an adhesion between the adhesive layer and either the positive electrode or the negative electrode.

From the foregoing, it will be appreciated that various embodiments of the present disclosure have been described herein for purposes of illustration, and that various modifications may be made without departing from the scope and spirit of the present disclosure. Accordingly, the various embodiments disclosed herein are not intended to be limiting, with the true scope and spirit being indicated by the following claims.

### List of Reference Numerals

100: separator for electrochemical device
110: porous polymer substrate
130: coating layer
131: first polymer binder
133: inorganic particles
150: adhesive layer
151: second polymer binder
300: positive electrode
500: negative electrode
1000: electrochemical device

## Claims

1. A separator for an electrochemical device, the separator comprising:
a porous polymer substrate;
a coating layer provided on at least one surface of the porous polymer substrate and including a first polymer binder and inorganic particles; and
an adhesive layer provided on the coating layer and including a second polymer binder,
wherein the first polymer binder is a solution type binder, and
a content of the first polymer binder included in a portion of the coating layer adjacent to the porous polymer substrate is greater than a content of the first polymer binder included in another portion facing away from the porous polymer substrate.

2. The separator for an electrochemical device according to claim 1, wherein a solubility of the second polymer binder in water is lower than a solubility of the first polymer binder in water.

3. The separator for an electrochemical device according to claim 1, wherein the first polymer binder is selected from the group consisting of polyacrylic acid, polyurethane, polyacrylonitrile, polyethylene glycol, polyacrylamide, polyvinyl alcohol, and combinations thereof.

4. The separator for an electrochemical device according to claim 1, wherein the second polymer binder is a particle type binder.

5. A method of manufacturing the separator for an electrochemical device of any one of claims 1 to 4, the method comprising:
providing a coating layer by applying a coating layer forming slurry including a first polymer binder and inorganic particles onto at least one surface of a porous polymer substrate; and
providing an adhesive layer by applying an adhesive layer forming slurry including a first polymer binder and a second polymer binder onto the coating layer.

6. The method of manufacturing the separator for an electrochemical device according to claim 5, further comprising:
drying the coating layer after the providing the coating layer; and
drying the adhesive layer after the providing the adhesive layer.

7. The method of manufacturing the separator for an electrochemical device according to claim 5, wherein a content of the first polymer binder dissolved in a solvent in the coating layer forming slurry is 0.1% by weight or more and 10% by weight or less.

8. The method of manufacturing the separator for an electrochemical device according to claim 5, wherein a content of the first polymer binder dissolved in a solvent in the adhesive layer forming slurry is 5% by weight or more and 40% by weight or less.

9. The method of manufacturing the separator for an electrochemical device according to claim 5, wherein an average particle diameter D₉₀ of the inorganic particles included in the coating layer forming slurry is 0.01 µm or more and 10.0 µm or less.

10. An electrochemical device comprising:
a positive electrode;
a negative electrode; and
the separator for an electrochemical device of any one of claims 1 to 4 that is interposed between the positive electrode and the negative electrode,
wherein an adhesion between the porous polymer substrate and the coating layer of the separator is 30 gf/25 mm or more.

11. The electrochemical device according to claim 10, wherein the adhesion between the porous polymer substrate and the coating layer is 5 gf/25 mm or more greater than an adhesion between the adhesive layer and either the positive electrode or the negative electrode.
